# EUROPÄISCHE PATENTSCHRIFT

(11) **EP 0 281 126 B1**
(45) Veröffentlichungstag und Bekanntmachung des Hinweises auf die Patenterteilung: **26.01.1994**
(21) Anmeldenummer: 88103242.9
(22) Anmeldetag: 03.03.1988
(51) Int. Cl.: G01F 3/14

(54) **Vorrichtung zum Messen oder Dosieren von strömenden Medien**
Device for measuring or dosing flowing materials
Dispositif pour mesurer ou doser des matériaux fluides

(30) Priorität: 06.03.1987 DE 3707186
(43) Veröffentlichungstag der Anmeldung: 07.09.1988
(73) Patentinhaber: David, Heinrich, D-61200 Wölfersheim (DE)
(72) Erfinder: David, Heinrich, D-61200 Wölfersheim (DE)
(74) Vertreter: Jackisch, Walter

(56) Entgegenhaltungen:
- AT-B- 30 721
- DE-A- 2 400 502
- DE-A- 2 549 576
- DE-C- 49 450

## Beschreibung

Die Erfindung betrifft eine Vorrichtung mit den Merkmalen des Oberbegriffs des Anspruchs 1.

Aus der DE-A-25 49 576 ist eine derartige Vorrichtung bekannt, bei der die Kolbenstange zur mechanischen Betätigung des Steuerschiebers ausgebildet ist. Hierzu wirkt der Kolbenschieber in der jeweiligen Bewegungsrichtung über einen Federspeicher auf den in seiner ersten Endstellung verrasteten Steuerschieber und stößt diesen nach Spannen des Federspeichers aus der Raststellung heraus. Der Federspeicher kann sich dann entspannen und bewirkt eine beschleunigte Verschiebung des Steuerschiebers in seine zweite Endstellung, in der die Rastvorrichtung wieder einrastet.

In der einen Endstellung des Steuerschiebers ist die erste Meßkammer über den zentralen Steuerkanal und eine Querverbindung im Steuerschieber mit dem Eingang und die zweite Meßkammer über Verbindungskanäle im Gehäuse und Überleitungskanäle im Steuerschieber mit dem Ausgang verbunden. In der anderen Endstellung verbindet der Steuerschieber die erste Meßkammer über den zentralen Steuerkanal mit dem Ausgang und den Eingang über die Verbindungskanäle mit der zweiten Meßkammer.

Aufgrund der Vielzahl der Bauelemente ist der Fertigungsaufwand sowie der Wartungsaufwand der Vorrichtung sehr hoch. Aufgrund der angeordneten Federn bedarf es eines bestimmten Anlaufdrucks des Mediums, um die Vorrichtung in Betrieb nehmen zu können. Die vielen Einzelteile führen zu einem relativ hohen Betriebsgeräusch und bedingen eine hohe Störanfälligkeit, die einen Einsatz der Vorrichtung insbesondere bei agressiven Medien weitgehend ausschließt.

Bei einer anderen bekannten Vorrichtung (DE-B-24 02 828) erfolgt der Antrieb nur durch eine Teilmenge des strömenden Mediums, da der größte Teil die im Inneren des Gehäuses vorgesehene Steuereinrichtung umfließt und direkt zum Ausgang geleitet ist, während nur eine kleine Menge des einströmenden Mediums zum Antrieb des Meßkolbens verwendet wird. Die Teilmenge wird durch eine Eingangsdrosselblende geführt, wodurch ein Druckverlust entsteht. Ein weiterer Druckverlust tritt im Bereich des Ausgangs aufgrund der hier vorgesehenen federbelasteten Steuerventile auf, die zudem gewisse Schlaggeräusche verursachen und mechanisch anfällig sind. Auch diese bekannte Dosierpumpe spricht demnach nur bei hohen Durchflußmengen an und erfordert aufgrund des nicht unerheblichen Druckverlustes durch die mit Federkraft beaufschlagten Steuerventile auch einen verhältnismäßig hohen Anlaufdruck, so daß eine Verwendung bei kleinen Durchflußmengen und/oder niedrigem Mediumsdruck nicht möglich ist.

Der Erfindung liegt die Aufgabe zugrunde, die bekannte Vorrichtung zum Messen oder Dosieren von strömenden Medien derart weiterzubilden, daß bei geringer Anzahl der Bauteile ein geräusch- und verschleißarmer, störungsfreier Betrieb bei geringem Anlaufdruck gewährleistet ist.

Diese Aufgabe wird erfindungsgemäß nach den kennzeichnenden Merkmalen des Anspruchs 1 gelöst.

Der von den Dichtungskörpern auf der Kolbenstange zum einen oder anderen Steuerraum absperrbare Steuerkanal dient ausschließlich der Druckzuführung, während der Hauptstrom als gemessene Volumenmenge über die jeweilige Meßkammer zum Ausgang geführt ist. Die ausschließlich hydraulisch bewirkte Umsteuerung erfolgt mit nur zwei bewegten Teilen, nämlich dem Steuerschieber und der mit dem Meßkolben verbundenen Kolbenstange, weshalb die erfindungsgemäße Vorrichtung geräuscharm und störungssicher arbeitet. Da zur Umsteuerung keine Federkräfte zu überwinden sind und der volle Volumenstrom zur Verschiebung des Meßkolbens ausgenutzt ist, weist die Vorrichtung einen niedrigen Anlaufdruck auf, so daß sie auch bei strömenden Medien mit geringem Druck einsatzfähig ist und störungsfrei arbeitet. Aufgrund der ausschließlich hydraulischen Betätigung des Steuerschiebers tritt ein merkbarer mechanischer Verschleiß nicht auf. Die Vorrichtung kann somit über längere Betriebszeiten hinweg ohne Wartung betrieben werden, ohne daß Meßungenauigkeiten oder Störungen im Gerät eintreten.

Zweckmäßige Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsbeispiele zeigt. Es stellen dar:
- Fig. 1: die erfindungsgemäße Vorrichtung in geschnittener Seitenansicht,
- FIG. 2: den inneren Teil der Vorrichtung gemäß FIG.1 in einer um 90° gedrehten Schnittansicht,
- FIG. 3: den inneren Teil der Vorrichtung gemäß FIG.2, jedoch mit in einer anderen Position befindlichem Steuerschieber und
- FIG. 4: den inneren Teil der Vorrichtung gemäß FIG.3, jedoch mit einem anders ausgebildeten Steuerschieber.

Die erfindungsgemäße Vorrichtung 1 ist als vollvolumengesteuertes Pumpaggregat ausgeführt und kann bevorzugt zum Messen oder Dosieren von strömenden Medien, wie Flüssigkeiten, Gasen, verwendet werden. Die Vorrichtung 1 besitzt ein Gehäuse 2, das in axialer Richtung an gegenüberliegenden Seiten (oben,unten) über je einen haubenförmigen Deckel 3,4 verschlossen ist. Im mittleren Bereich des Gehäuses 2 befindet sich ein Gehäuseeinsatz 5, der in einen Zylinder 6 eingesetzt ist. Der Gehäuseeinsatz 5 ist gegenüber der Wandung des Zylinders 6 und gegenüber der Gehäusewandung mittels Dichtringen 7 abgedichtet. Ebenso ist der Zylinder 6 gegenüber der Wandung des Gehäuses 2 mittels Dichtringen 7 abgedichtet. Das Gehäuse 2 weist zudem eine obere Gehäusekammer 8 und eine untere Gehäusekammer 9 auf. Die Gehäusekammer 8 ist im wesentlichen vom Deckel 3 und vom Gehäuseeinsatz 5 begrenzt, während die Gehäusekammer 9 vom Boden 10 des eingesetzten Zylinders 6 und vom unteren Deckel 4 begrenzt ist. Der Gehäuseeinsatz 5 und der Zylinder 6 können über z.B. sprengringförmige Befestigungsteile 11 im Gehäuse 2 lösbar festgelegt sein. Im unteren Deckel 4 ist eine zentrale Öffnung 49 vorgesehen, die durch eine Verschlußschraube 50 dicht verschlossen ist.

Für den Zulauf des Mediums quer zur Längsachse des Gehäuses 2 kann an der einen (linken) Seite des Gehäuses 2 ein bevorzugt als Stutzen ausgeführter Eingang 12 vorgesehen sein. An der gegenüberliegenden (rechten) Seite des Gehäuses 2 kann sich der Ausgang 13 befinden, der bevorzugt ebenfalls als Stutzen ausgeführt sein kann, durch den das Medium weggeführt werden kann. Das Gehäuse 2, der Zylinder 6 und der Gehäuseeinsatz 5 können aus Kunststoff oder aus Metall hergestellt sein.

In der unteren Gehäusekammer 9 befindet sich als Meßkolben ein Membrankolben 14, dessen Umfangsrand 15 zwischen Flanschen des Gehäuses 2 und Deckels 4 dicht festgelegt sein kann. Der Meßkolben teilt die untere Gehäusekammer 9 in eine erste Meßkammer 45 und eine zweite Meßkammer 46 auf. Der beim vorliegenden Ausführungsbeispiel bevorzugt als Membrane ausgeführte Kolben 14 kann in einer anderen, nicht dargestellten Ausführung auch als nichtelastischer Scheiben- oder Zylinderkolben ausgebildet sein, der in der Gehäusekammer 9 an einer zylindrischen Innenfläche dicht gleitend geführt ist. Der Membrankolben 14 ist in der Mitte an einer Kolbenstange 16 befestigt, die koaxial zur vertikalen Mittenachse der Vorrichtung 1 liegt und im Boden 10 des Zylinders 6 dicht geführt ist. Die Kolbenstange 16 durchragt einen Steuerschieber 17, der im Gehäuseeinsatz 5 axial verschiebbar gelagert ist. Die den Steuerschieber 17 axial durchsetzende Bohrung ist im Durchmesser größer als die Kolbenstange 16, so daß ein als Ringspalt ausgebildeter Steuerkanal 18 für das Medium gegeben ist. Der Steuerkanal 19 stellt eine Verbindung dar zwischen einem oberen Steuerraum 19 im Gehäuseeinsatz 5 und einem unteren Steuerraum 20, der im Boden 10 des Zylinders 6 ausgebildet ist.

Die Steuerräume 19, 20 sind von Kolbenteilen 21, 22 mitbegrenzt, die an gegenüberliegenden Enden des Steuerschiebers 17 ausgebildet sind. Der Steuerraum 19 im Gehäuseeinsatz 5 kann oben mit einem Gewindestopfen 23 dicht verschlossen sein, der ein innen liegendes Sackloch 24 aufweisen kann, in das das freie Ende der Kolbenstange 16 bei Axialverschiebung nach oben eintauchen kann. Der Steuerschieber 17 weist an den gegenüberliegenden Enden im Bereich der Kolbenteile 21, 22 je eine sich in Richtung zur Kolbenstirnfläche 25 bzw. zum Steuerraum 19, 20 sich vergrößernde konische Erweiterung 26 auf. Außerdem ist zu erkennen, daß an der Kolbenstange 16 zwei auf Abstand zueinander angeordnete Dichtkörper (O-Ringe) 27 angeordnet sind, die zur wechselseitigen Abdichtung und Freigabe des ringspaltförmigen Steuerkanals 18 beim Verschieben der Kolbenstange 16 in die konischen Erweiterungen 26 des Steuerschiebers 17 ein- bzw. ausgeschoben werden.

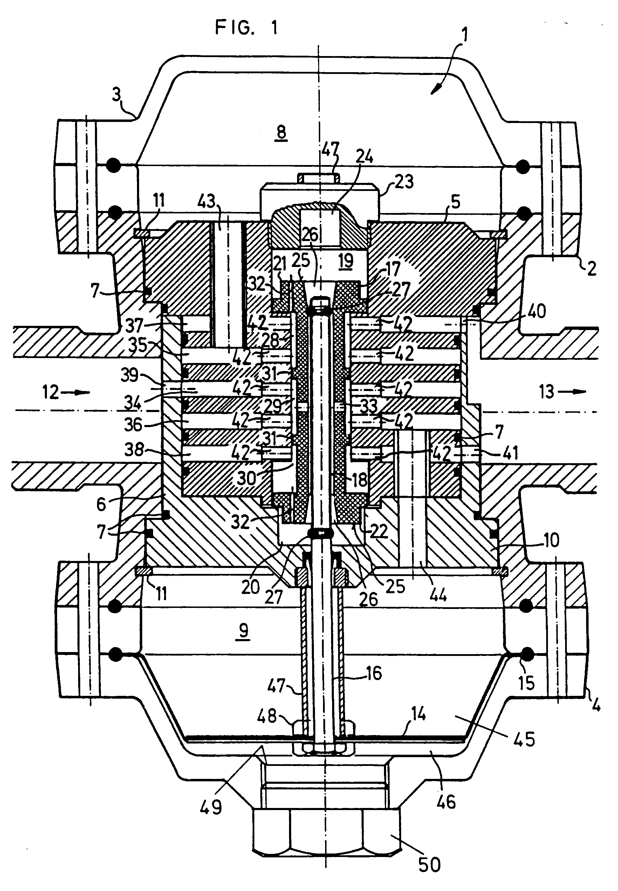

Im Bereich zwischen den beiden Kolbenteilen 21, 22 weist der Steuerschieber 17 drei Überleitungskanäle 28, 29, 30 auf, die durch Umfangsbunde 31 und endseitig von den Kolbenteilen 21, 22 begrenzt sind. Die Überleitungskanäle 28, 29, 30 sind somit als am Steuerschieber 17 ausgebildete Umfangsnuten ausgeführt, die beim Ausführungsbeispiel der Fig. 1 bis 3 verhältnismäßig schmal sind, da der Durchmesser der Umfangsbunde 31 kleiner ist als der Durchmesser der Kolbenteile 21, 22. Dadurch sind die Überleitungskanäle 28, 29, 30 dieses Ausführungsbeispiels verhältnismäßig schmale Ringspalte, deren axiale Länge um ein Vielfaches größer ist als die radiale Tiefe. In den Kolbenteilen 21, 22 ist je ein Durchgang 32 als Entlastungsöffnung für den Steuerraum ausgebildet. Der Durchgang 32 im Kolbenteil 21 stellt eine Verbindung zwischen dem oberen Steuerraum 19 und dem oberen Überleitungskanal 28 dar, während der Durchgang 32 im Kolbenteil 22 den unteren Steuerraum 20 mit dem unteren Überleitungskanal 30 verbindet. Der Durchgang 32 hat einen erheblich kleineren Durchtrittsquerschnitt als der Medium zuführende Steuerkanal 18. Darüberhinaus besitzt der Steuerschieber 17 eine Querverbindung 33 zwischen dem mittleren Überleitungskanal 29 und dem Steuerkanal 18.

Der Gehäuseeinsatz 5 weist eine Einströmkammer 34, zwei Umlenkkammern, 35, 36 und zwei Ausströmkammern 37, 38 auf. Diese Einström-, Umlenk- und Ausströmkammern 34 bis 38 sind in verschiedenen Ebenen auf Abstand neben- bzw. übereinander im Gehäuseeinsatz 5 angeordnet und können bevorzugt als Ringkammern ausgeführt sein, die den Steuerschieber 17 umgeben. Die Einströmkammer 34 befindet sich etwa in der Mitte des Gehäuseeinsatzes 5 zwischen der darüber liegenden Umlenkkammer 35 und der darunter liegenden Umlenkkammer 36. Die Ausströmkammer 37 befindet sich in einer oberen Ebene, während die Ausströmkammer 38 in einer unteren Ebene liegt. In der Wandung des Zylinders 6 ist zwischen dem Eingang 12 und der Einströmkammer 34 ein Durchbruch 39 ausgebildet. Außerdem ist an der gegenüberliegenden Seite in der Wandung des Zylinders 6 zur Verbindung des Ausgangs 13 mit der oberen Ausströmkammer 37 ein Durchbruch 40 und zur Verbindung mit der unteren Ausströmkammer 38 ein weiterer Durchbruch 41 ausgebildet.

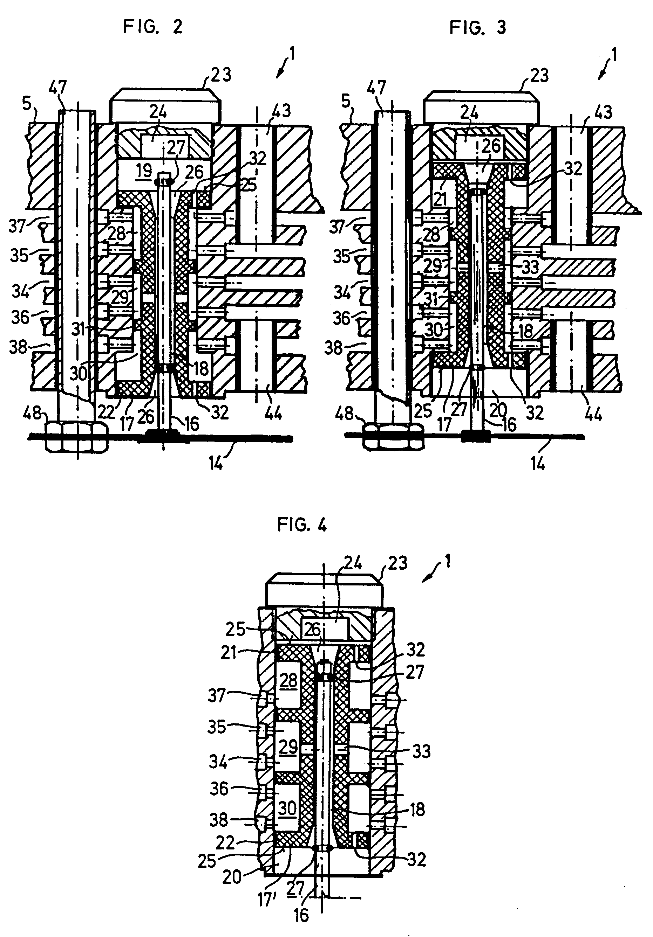

Die Verbindung zwischen den Kammern 34 bis 38 mit den Überleitungskanälen 28, 29, 30 erfolgt durch Bohrungen 42, die bevorzugt in den Ebenen der Kammern 34 bis 38 liegen. Der Abstand zwischen den Kammern 34 bis 38 und die Länge der Überleitungskanäle 28 bis 30 sind so bemessen, daß die Länge jeder der Überleitungskanäle 28, 29, 30 in axialer Richtung etwas größer ist als der Abstand zwischen zwei der Kammern 34 bis 38. Die Überleitungskanäle 28 bis 30 und die Kammern 34 bis 38 sind so aufeinander abgestimmt, daß in der unteren Position (erste Endstellung) des Steuerschiebers 17 (Fig. 1 und 2) der Überleitungskanal 29 die Einströmkammer 34 mit der Umlenkkammer 36 verbindet und der Überleitungskanal 28 die Umlenkkammer 35 mit der oberen Ausströmkammer 37 verbindet. In der anderen oberen Position (zweite Endstellung) des Steuerschiebers 17 (Fig. 3 und 4) sind die Einströmkammer 34 und die Umlenkkammer 35 über den mittleren Überleitungskanal 29 verbunden, während die Umlenkkammer 36 und die Ausströmkammer 38 durch den Überleitungskanal 30 verbunden sind.

Zum Ausführungsbeispiel der Fig. 4 ist noch zu erwähnen, daß bei diesem Steuerschieber 17ʹ die als Umfangsnuten ausgeführten Überleitungskanäle 28, 29, 30 wesentlich tiefer ausgebildet sind, so daß ein größerer Querschnitt und somit ein größeres Ringvolumen für den Durchfluß des Mediums gegeben ist. Der Steuerschieber 17ʹ weist hierbei einen im wesentlichen zylindrisch gleichmäßigen Außendurchmesser auf. Das heißt, daß der Durchmesser der Kolbenteile 21, 22 und der Durchmesser der Umfangsbunde 31 gleich groß sind. Durch den größeren Querschnitt der Überleitungskanäle 29, 30, 31 wird der Vorteil eines äußerst geringen Druckverlustes erreicht, so daß die erfindungsgemäße Vorrichtung besonders vorteilhaft bei strömenden Medien mit sehr niedrigem Druck eingesetzt werden kann. Die erfindungsgemäße Vorrichtung mit dem anderen Steuerschieber 17 (Fig. 1 bis 3), bei dem die Überleitungen 28, 29, 30 schmaler ausgebildet sind, kann besonders vorteilhaft dort eingesetzt werden, wo die minimalen Anlaufgrenzen des Gerätes extrem niedrig liegen sollen.

Den Fig. 1 bis 3 ist weiterhin zu entnehmen, daß die obere Umlenkkammer 35 über einen Kanal 43 mit der oberen Gehäusekammer 8 verbunden ist. Die untere Umlenkkammer 36 ist über einen Kanal 44 mit der unteren Gehäusekammer 9 verbunden. Außerdem ist den Fig. 1 bis 3 zu entnehmen, daß zwischen der oberen Gehäusekammer 8 und der abgeschlossenen, zweiten Meßkammer 46 eine Verbindungsleitung 47 besteht. Die Verbindungsleitung 47 durchsetzt den Gehäuseeinsatz 5 und den Boden 10 des Zylinders 6 und kann dabei zweckmäßig in einer z.B. aus Kunststoff bestehenden Gleithülse reibungsarm axial verschiebbar geführt sein. Die Verbindungsleitung 47 durchsetzt den Membrankolben 14 und kann an diesem mittels einer Gewindemutter 48 lösbar befestigt sein. Es liegt auch im Rahmen der Erfindung, die Verbindungsleitung 47 zwischen der oberen Gehäusekammer 8 und der unteren Meßkammer 46 anders auszubilden und z.B. außen im Gehäuse in Form eines Schlauches oder dergleichen entlangzuführen.

Beim Betrieb der Vorrichtung 1 fließt das Medium vom Eingang 12 durch den Durchbruch 39 in die Einströmkammer 34 und von dort durch eine der Bohrungen 42 in den mittleren Überleitungskanal 29 des ausschließlich hydraulisch betätigten Steuerschiebers 17 und gelangt dann in die Umlenkkammer 36 und durch den Kanal 44 in die über dem Membrankolben 14 befindliche erste, obere Meßkammer 45 und drückt den Membrankolben 14 nach unten. Das in der unteren Meßkammer 46 befindliche Medium wird durch die Verbindungsleitung 47 in die obere Gehäusekammer 8 geleitet und fließt von dort durch den Kanal 43 in die Umlenkkammer 35 und durch die Bohrung 42 in den oberen Überleitungskanal 28 des Steuerschiebers 17. Von dort fließt das Medium in die obere Ausströmkammer 37 und durch den Durchbruch 40 zum Ausgang 13.

Befindet sich der Membrankolben 14 wie in Fig. 1 und 2 am unteren Umsteuerpunkt, so fließt durch die Querverbindung 33 im Steuerschieber 17 eine Teilmenge des ankommenden Mediums durch den Steuerkanal 18 in den Steuerraum 20 unterhalb des Steuerschiebers 17 und schiebt diesen in entgegengesetzter Richtung nach oben. Das Medium im oberen Steuerraum 19 wird verdrängt und fließt durch den Durchgang 32 im oberen Kolbenteil 21 in den Überleitungskanal 28, dann in die Ausströmkammer 37 und von dort zum Ausgang 13.

Befindet sich der Membrankolben 14 am oberen Umsteuerpunkt (Fig. 3 und 4), so fließt das Medium vom Eingang 12 durch die Einströmkammer 34 und den mittleren Überleitungskanal 29 in die Umlenkkammer 35. Von dort fließt das Medium durch den Kanal 43 in die obere Gehäusekammer 8 und von hier durch die Verbindungsleitung 47 in die untere Meßkammer 46, wodurch der Membrankolben 14 nach oben gedrückt wird. Das über dem Membrankolben 14 in der Gehäusekammer 9 befindliche Medium wird durch den Kanal 44, die Umlenkkammer 36, den unteren Überleitungskanal 30 und die untere Ausströmkammer 38 zum Ausgang 13 geleitet.

Wie bereits angedeutet, kann auch eine Ausführungsform zweckmäßig sein, bei der die Überleitung 47 keine Führungsfunktion für die Membran 14 besitzt. Beispielsweise wäre es denkbar, daß anstelle der dargestellten Verbindungsleitung 47 Schläuche oder sonstige Verbindungsleitungen außerhalb des Gehäuses 2 verlegt sind, wobei diese Verbindungsleitungen die Meßkammer 46 mit der Gehäusekammer 8 verbinden.

Die erfindungsgemäße Vorrichtung 1 dient nicht selbst der Flüssigkeitsdosierung, sondern ist im wesentlichen ein Antriebsgerät, das bevorzugt auch als Mengenmeßgerät eingesetzt werden kann, da sich der Membrankolben 14 proportional zur einströmenden Mediumsmenge bewegt. Demgemäß ist die Anzahl der Membranhübe pro Zeiteinheit ein Maß für die durch das Gerät geflossene Mediumsmenge, so daß dieses Gerät als genau arbeitendes Mengenmeßgerät einsetzbar ist.

Wird die erfindungsgemäße Vorrichtung 1 einer Dosiereinrichtung zugeordnet, dann wird der Membrankolben 14 bzw. dessen Kolbenstange 16 mit dem Kolben bzw. der Kolbenstange des Dosiergerätes fest verbunden, was über die Öffnung 49 geschehen kann. Der Dosierkolben führt dann eine der Membranbewegung entsprechende Bewegung aus und fördert das zu dosierende Mittel ebenfalls mengenproportional.

Bei der erfindungsgemäßen Vorrichtung 1 wird die volle Menge des einströmenden Mediums über die beschriebenen Kammern zur Steuerung des Meßkolbens verwendet, so daß das gesamte Einströmvolumen voll auf den Membrankolben 14 einwirkt und zum Anlaufen der Vorrichtung nur eine geringe Mediumsmenge und ein nur niedriger Mediumsdruck benötigt wird. Es können somit bereits verhältnismäßig kleine Mengen genau dosiert und gemessen werden. Da das Medium weitgehend ungedrosselt durch die Vorrichtung 1 strömen kann und keine federbelasteten Ventilsteuerungen vorhanden sind, ist der Druckverlust sehr gering, so daß ein hoher Wirkungsgrad gewährleistet ist. Da nur wenige bewegliche Teile und keine mechanischen Federn vorhanden sind, tritt kaum ein Verschleiß auf, wodurch eine zuverlässige Funktion über lange Zeit gewährleistet ist. Die Vorrichtung 1 arbeitet aufgrund ihrer erfindungsgemäßen Ausgestaltung äußerst leise und verursacht keine schlagenden oder andere störenden Geräusche.

## Patentansprüche

1. Vorrichtung zum Messen oder Dosieren von strömenden Medien, wie Flüssigkeiten oder Gase, bestehend aus:
- einem Gehäuse (2) mit einem Eingang (12) und einem Ausgang (13),
- mindestens einer Gehäusekammer (9), die von einem Meßkolben (14) in eine erste und eine zweite Meßkammer (45, 46) aufgeteilt ist,
- einem zwischen Eingang (12) und Ausgang (13) im Gehäuse (2) angeordneten Steuerschieber (17), der in seinen beiden Endstellungen die Meßkammern (45, 46) wechselweise mit dem Eingang (12) oder dem Ausgang (13) verbindet,
- einer mit dem Meßkolben (14) verbundenen Kolbenstange (16), die axial verschiebbar einen im Durchmesser größer ausgebildeten axialen Steuerkanal (18) des Steuerschiebers (17) durchragt, wobei der Steuerschieber (17) relativ zur Kolbenstange (16) axial beweglich ist,
- im Umfang des Steuerschiebers (17) angeordnete Überleitungskanälen (28, 29, 30) zur Steuerung von im Gehäuse (2) angeordneten Verbindungskanälen zum Eingang (12), Ausgang (13) und den Meßkammern (45, 46),
dadurch gekennzeichnet,
daß in jeder Endstellung des Steuerschiebers (17) der Steuerkanal (18) über Querverbindung (33) im Steuerschieber (17) und über einen Überleitungskanal (29) mit dem Eingang (12) verbunden ist,
- der Steuerschieber (17) zur ausschließlichen hydraulischen Betätigung in beide Axialrichtungen zwischen zugeordneten hydraulischen Steuerräumen (19, 20) liegt, in die der Steuerkanal (18) mündet und die ferner je eine mit dem Ausgang (13) in Verbindung stehende Entlastungsöffnung (32) aufweisen,
- der Steuerkanal (18) über auf der Kolbenstange (16) angeordnete Dichtkörper (27) wechselweise zum einen oder anderen Steuerraum (19, 20) absperrbar ist.

2. Vorrichtung nach Anspruch 1,
dadurch gekennzeichnet, daß der Steuerschieber (17) in einem Gehäuseeinsatz (5) geführt ist, in dem zwei mit einer Einströmkammer (34) über den einen Überleitungskanal (29) abwechselnd verbindbare Umlenkkammern (35, 36 angeordnet sind, die über Kanäle (43, 44) mit je einer der Meßkammern (45, 46) verbunden sind, und mit zwei Ausströmkammern (37), die über zwei weitere Überleitungskanäle (28, 30) im Steuerschieber (17) abwechselnd mit den Umlenkkammern (35, 36) verbindbar sind.

3. Vorrichtung nach Anspruch 2,
dadurch gekennzeichnet, daß die Einström-, Umlenk- und Ausströmkammern (34 bis 38) in verschiedenen Ebenen auf Abstand nebeneinander im Gehäuseeinsatz (5) angeordnet und bevorzugt als den Steuerschieber (17, 17') umgebende Ringkammern ausgebildet sind.

4. Vorrichtung nach Anspruch 2 oder 3,
dadurch gekennzeichnet, daß die Überleitungskanäle (28, 29, 30) des Steuerschiebers (17, 17') als durch Umfangsbunde (31) getrennte Umfangsnuten ausgebildet sind, deren Länge in axialer Richtung etwas größer ist als der Abstand zwischen zwei der Kammern (34 bis 38) des Gehäuseeinsatzes (5).

5. Vorrichtung nach einem der Ansprüche 1 bis 4,
dadurch gekennzeichnet, daß der Steuerschieber (17, 17') an gegenüberliegenden Enden je einen Kolbenteil (21, 22) mit einer den Steuerraum (19, 20) mitbegrenzenden Kolbenstirnfläche (25) aufweist und im Kolbenteil (21, 22) die Entlastungsöffnung (32) vorgesehen ist, die in den benachbarten Überleitungskanal (28, 30) im Steuerschieber (17, 17') und über diesen in die Ausströmkammer (37, 38) mündet.

6. Vorrichtung nach Anspruch 5,
dadurch gekennzeichnet, daß in einem oberen Kolbenteil (21) und in einem unteren Kolbenteil (22) des Steuerschiebers (17, 17') je eine bevorzugt konische Erweiterung (26) für das Ein- und Ausschieben des Dichtkörpers (27) ausgebildet ist.

7. Vorrichtung nach Anspruch 6,
dadurch gekennzeichnet, daß der Steuerschieber (17, 17') Umfangsbunde (31) aufweist, die die Überleitungskanäle (28, 29, 30) begrenzen, wobei deren Durchmesser kleiner ist als der Durchmesser der Kolbenteile (21, 22) und die radiale Tiefe der schmalen Überleitungskanäle (28, 29, 30) um ein Mehrfaches kleiner ist als deren axiale Länge.

8. Vorrichtung nach Anspruch 7,
dadurch gekennzeichnet, daß der Durchmesser der die Überleitungskanäle (28, 29, 30) begrenzenden Umfangsbunde (31) des Steuerschiebers (17, 17') etwa gleich oder größer ist als der Durchmesser der Kolbenteile (21, 22) und die radiale Tiefe und damit das Volumen der Überleitungskanäle (28, 29, 30) verhältnismäßig groß ist.

9. Vorrichtung nach einem der Ansprüche 1 bis 8,
dadurch gekennzeichnet, daß Steuerschieber (17, 17') und Kolbenstange (16) in einem Gehäuseeinsatz (5) vorgesehen sind, der seinerseits in einem Zylinder (16) angeordnet ist, der mit dem Gehäuseeinsatz (5) bevorzugt koaxial im Gehäuse (2) zwischen einer oberen Gehäusekammer (8) und einer unteren Gehäusekammer (9) gelagert ist, und daß der Zylinder (6) zwischen dem Eingang (12) des Gehäuses (2) und der Einströmkammer (34) des Gehäuseeinsatzes (5) sowie zwischen dessen Ausströmkammern (37, 38) und dem Ausgang (13) des Gehäuses (2) je einen Durchbruch (39, 40, 41) für das Medium aufweist.

10. Vorrichtung nach Anspruch 9,
dadurch gekennzeichnet, daß die obere Gehäusekammer (8) mit der einen Meßkammer (46) über eine im Gehäuseeinsatz (5) und in dem Zylinder (6) axial verschiebbar geführte Verbindungsleitung (47) verbunden ist, die den Meßkolben (14) durchsetzt.

## Claims

1. Apparatus for measuring or dosing flowing media, such as liquids or gases, consisting of:
- a housing (2) with an inlet (12) and an outlet (13),
- at least one housing chamber (9), which is divided by a measuring piston (14) into a first and a second measuring chamber (45,46),
- a control slide valve (17) located between the inlet (12) and outlet (13) in the housing (2), which valve in its two end positions connects the measuring chambers (45,46) alternately to the inlet (12) or the outlet (13),
- a piston rod (16) connected to the measuring piston (14), which projects in an axially displaceable manner through an axial control channel (18) of larger diameter of the control slide valve (17), the control slide valve (17) being able to move axially relative to the piston rod (16),
- transfer channels (28,29,30) disposed in the periphery of the control slide valve (17), for controlling connecting channels to the inlet (12), outlet (13) and measuring chambers (45,46), which channels are disposed in the housing (2), characterised in that in each end position of the control slide valve (17), the control channel (18) is connected by way of a transverse connection (33) in the control slide valve (17) and by way of a transfer channel (29) to the inlet (12),
- for exclusively hydraulic actuation in both axial directions, the control slide valve (17) lies between associated hydraulic control chambers (19,20) , into which the control channel (18) opens and which furthermore each comprise a relief opening (32) connected to the outlet (13),
- the control channel (18) can be shut off alternately with respect to one or the other control chamber (19,20) by way of sealing members (27) disposed on the piston rod (16).

2. Apparatus according to Claim 1, characterised in that the control slide valve (17) is guided in a housing insert (5), in which two deflection chambers (35, 36) are located, which are able to be connected alternately to an inlet chamber (34) by way of one transfer channel (29), which chambers (35,36) are connected by way of channels (43,44) to respectively one of the measuring chambers (45,46) and with two outlet chambers (37), which can be connected by way of two further transfer channels (28,30) in the control slide valve (17) alternately to the deflection chambers (35,36).

3. Apparatus according to Claim 2, characterised in that the inlet, deflection and outlet chambers (34 to 38) are arranged in different planes at a distance apart, one beside the other, in the housing insert (5) and are preferably constructed as annular chambers surrounding the control slide valve (17,17').

4. Apparatus according to Claim 2 or 3, characterised in that the transfer channels (28,29,30) of the control slide valve (17,17') are constructed as peripheral grooves separated by peripheral collars (31), the length of which grooves in the axial direction is somewhat greater than the distance between two of the chambers (34 to 38) of the housing insert (59.

5. Apparatus according to one of Claims 1 to 4, characterised in that at opposite ends the control slide valve (17,17') comprises respectively a piston part (21,22) with a piston end face (25) co-defining the control chamber (19,20) and provided in the piston part (21,22) is the relief opening (32), which opens into the adjacent transfer channel (28,30) in the control slide valve (17,17') and by way of the latter into the outlet chamber (37,38).

6. Apparatus according to Claim 5, characterised in that a preferably conical enlargement (26) for the pushing-in and pushing-out of the sealing member (27) is respectively provided in an upper piston part (21) and in a lower piston part (22) of the control slide valve (17,17').

7. Apparatus according to Claims 6, characterised in that the control slide valve (17,17') comprises peripheral collars (31), which define the transfer channels (28,29,30), whereof the diameter is less than the diameter of the piston parts (21,22) and the radial depth of the narrow transfer channels (28,29,30) is several times smaller than their axial length.

8. Apparatus according to Claim 7, characterised in that the diameter of the peripheral collars (31) of the control slide valve (17,17') defining the transfer channels (28,29,30) is approximately the same size as or greater than the diameter of the piston parts (21,22) and the radial depth and thus the volume of the transfer channel (28,29,30) is relatively great.

9. Apparatus according to one of Claims 1 to 8, characterised in that the control slide valve (17,17') and piston rod (16) are provided in a housing insert (5), which is in turn located in a cylinder (16), which is mounted with the housing insert (5) preferably coaxially in the housing (2) between an upper housing chamber (8) and a lower housing chamber (9), and that the cylinder (6) between the inlet (12) and the housing (2) and the inlet chamber (34) of the housing insert (5) as well as between its outlet chambers (37,38) and the outlet (13) of the housing (2) respectively comprises an opening (39,40,41) for the medium.

10. Apparatus according to Claim 9, characterised in that the upper housing chamber (8) is connected to the one measuring chamber (46) by way of a connecting line (47) guided to slide axially in the housing insert (5) and in the cylinder (6), which connecting line passes through the measuring piston (14).

## Revendications

1. Dispositif pour mesurer ou doser des matériaux fluides, tels que liquides ou gaz, composé:
- d'un carter (2) avec une entrée (12) et une sortie (13),
- d'un compartiment de carter au moins (9), subdivisé par un piston de mesure (14) en une première et en une seconde chambre de mesure (45, 46),
- d'un tiroir de commande (17), disposé dans le carter (2) entre l'entrée (12) et la sortie (13), et qui relie alternativement, dans ses deux positions extrêmes, les chambres de mesure (45, 46) à l'entrée (12) ou à la sortie (13),
- d'une tige de piston (16), assemblée avec le piston de mesure (14) et qui pénètre, avec une possibilité de déplacement axial, au travers d'un conduit de commande axial (18), de diamètre supérieur, du tiroir de commande (17), le tiroir (17) étant mobile dans le sens axial par rapport à la tige de piston (16),
- de conduits de transfert (28, 29, 30), disposés sur le pourtour du tiroir de commande (17), pour la commande de conduits de jonction, prévus dans le carter (2), avec l'entrée (12), la sortie (13) et les chambres de mesure (45, 46), caractérisé en ce que,
- dans chaque position extrême du tiroir de commande (17), le conduit de commande (17) est relié à l'entrée (12) par l'intermédiaire d'une jonction transversale (33), prévue dans le tiroir de commande (17), et par l'intermédiaire d'un conduit de transfert (29),
- le tiroir de commande (17), pour une commande exclusivement hydraulique dans les deux sens axiaux, se situe entre des espaces de commande hydrauliques (19, 20) associés, dans lesquels débouche le conduit de commande (18), et qui présentent respectivement un orifice de décharge (32) relié à la sortie (13),
- le conduit de commande (18) peut être fermé alternativement par rapport à l'un ou à l'autre espace de commande (19, 20), par l'intermédiaire de corps d'étanchéité (27) disposés sur la tige de piston (16).

2. Dispositif suivant la revendication 1, caractérisé en ce que le tiroir de commande (17) est guidé dans une garniture de carter (5), dans laquelle sont disposées deux chambres de renvoi (35, 36), qui peuvent être reliées alternativement à une chambre d'admission (34) par l'intermédiaire de l'un des conduits de transfert (29), chaque chambre de renvoi étant reliée par des conduits (43, 44) à l'une des chambres de mesure (45, 46), et à deux chambres d'évacuation (37, 38), qui peuvent être reliées alternativement aux chambres de renvoi (35, 36) par l'intermédiaire de deux autres conduits de transfert (28, 30), prévus dans le tiroir de commande (17).

3. Dispositif suivant la revendication 2, caractérisé en ce que les chambres d'admission, de renvoi et d'évacuation (34 à 38) sont juxtaposées dans différents plans, à distance les unes des autres, dans la garniture de carter (5), et sont réalisées de préférence sous forme de chambres annulaires enveloppant le tiroir de commande (17, 17').

4. Dispositif suivant l'une des revendications 2 et 3, caractérisé en ce que les conduits de transfert (28, 29, 30) du tiroir de commande (17, 17') sont réalisés sous forme de rainures périphériques, séparées par des collets périphériques (31), et dont la longueur dans le sens axial est légèrement plus élevée que la distance entre deux des chambres (34 à 38) de la garniture de carter (5).

5. Dispositif suivant l'une quelconque des revendications 1 à 4, caractérisé en ce que le tiroir de commande (17, 17') présente, sur chaque extrémité opposée, une section de piston (21, 22) avec une surface frontale (25) délimitant l'espace de commande (19, 20), la section de piston (21, 22) comportant l'orifice de décharge (32), qui débouche dans le conduit de transfert adjacent (28, 30) du tiroir de commande (17, 17'), et dans les chambres d'évacuation (37, 38) par l'intermédiaire du conduit précité.

6. Dispositif suivant la revendication 5, caractérisé en ce qu'un élargissement (26), conique de préférence, est réalisé dans une section de piston supérieure (21) et dans une section de piston inférieure (22) du tiroir de commande (17, 17'), pour l'insertion et le retrait du corps d'étanchéité (27).

7. Dispositif suivant la revendication 6, caractérisé en ce que le tiroir de commande (17, 17') présente des collets périphériques (31), qui limitent les conduits de transfert (28, 29, 30), le diamètre de ces collets étant inférieur à celui des sections de piston (21, 22), et la profondeur radiale des conduits de transfert étroits (28, 29, 30) étant inférieure d'un multiple à leur longueur axiale.

8. Dispositif suivant la revendication 7, caractérisé en ce que le diamètre des collets périphériques (31) du tiroir de commande (17, 17'), qui limitent les conduits de transfert (28, 29, 30), est à peu près égal ou supérieur à celui des sections de piston (21, 22), la profondeur radiale, donc le volume des conduits de transfert (28, 29, 30), étant relativement élevés.

9. Dispositif suivant l'une quelconque des revendications 1 à 8, caractérisé en ce que le tiroir de commande (17, 17') et la tige de piston (16) sont prévus dans une garniture de carter (5), elle-même disposée dans un cylindre (6), qui est logé avec la garniture (5), d'une manière coaxiale de préférence, dans le carter (2), entre un compartiment de carter supérieur (8) et un compartiment de carter inférieur (9), et en ce que le cylindre (6) présente une ouverture (39, 40, 41) pour le fluide, entre l'entrée (12) du carter (2) et la chambre d'admission (34) de la garniture de carter (5), et entre les chambres d'évacuation (37, 38) de cette dernière et la sortie (13) du carter (2).

10. Dispositif suivant la revendication 9, caractérisé en ce que le compartiment de carter supérieur (8) est relié à l'une des chambres de mesure (46) par l'intermédiaire d'une conduite de jonction (47) guidée, avec une possibilité de déplacement axial, dans la garniture de carter (5) et dans le cylindre (6), et qui traverse le piston de mesure (14).
